Europäisches Patentamt

European Patent Office

Office européen des brevets

(19)

(11) Publication number:

**0 088 817**
**B1**

# EUROPEAN PATENT SPECIFICATION

(12)

(45) Date of publication of patent specification: **23.07.86**

(21) Application number: **82102173.0**

(22) Date of filing: **17.03.82**

(51) Int. Cl.⁴: **F 16 L 15/00**, F 16 L 39/00, E 21 B 17/08

(54) **Corrosion-restistant pipe coupling structures.**

(43) Date of publication of application:
**21.09.83 Bulletin 83/38**

(45) Publication of the grant of the patent:
**23.07.86 Bulletin 86/30**

(84) Designated Contracting States:
**DE FR GB NL SE**

(56) References cited:
EP-A-0 027 771
DD-A- 130 591
DE-A-2 633 465
GB-A-1 413 230
GB-A-1 428 433
US-A-3 870 351
US-A-3 919 761
US-A-4 026 583

(73) Proprietor: **Kawasaki Jukogyo Kabushiki Kaisha**
**1-1 Higashikawasaki-cho 3-chome**
**Chuo-ku Kobe-shi Hyogo-ken (JP)**

(72) Inventor: **Yoshida, Toshio**
**2-23, Rikyumae-Cho 1-Chome Suma-Ku**
**Kobe-Shi Hyogo-Ken (JP)**
Inventor: **Itoga, Kouyu**
**1-462-401, Nakaochiai 4-Chome Suma-Ku**
**Kobe-Shi Hyogo-Ken (JP)**
Inventor: **Matsui, Shigetomo**
**4-25, Higashiyama-Cho**
**Higashiosaka-Shi Osaka-Fu (JP)**
Inventor: **Atsuta, Toshio**
**6-21, Uenomaru 2-Chome**
**Akashi-Shi Hyogo-Ken (JP)**

(74) Representative: **Klunker, Hans-Friedrich, Dr.**
**et al**
**Patentanwälte Klunker . Schmitt-Nilson . Hirsch**
**Winzererstrasse 106**
**D-8000 München 40 (DE)**

## Description

This invention relates to a corrosion-resistant pipe structure, and more particularly to a pipe coupling structure used for piping in chemical and other plants, oil and gas pipelines, well tubes, and like piping.

In the piping and pipelines referred to above, multiple-wall composite pipes are used for transporting fluids such as those containing corrosive substances. A typical multiple-wall composite pipe is a dual or double-wall pipe in which the inner wall is a liner tube made of a corrosion-resistant material for effective conducting of corrosive fluid and the outer wall or pipe is designed to provide strength to withstand internal pressures of the corrosive fluid and external forces. For example, there is a double-wall pipe comprising a stainless-steel inner pipe and a carbon-steel outer pipe in which the inner pipe is interference-fitted.

There are certain limitations to the length of such multiple-wall pipes due to restrictions in the manufacture of the pipes and to conditions in which the pipes are installed in site. Therefore, pipe couplings are used to obtain a desired length of piping as is well known in the art. As a matter of course, the pipe couplings are also required to have an internal corrosion resistance as well as a mechanical strength to withstand internal pressures and external forces.

A pipe coupling structure as defined in the precharacterizing portion of the claim is known from GB—A—1 428 433 or US—A—3 870 351.

The radially inner surface of the annular projection is made to have the same diameter as the inner diameter of the two pipes to be coupled whereby a smooth, continuous or uninterrupted cylindrical inner surface is formed from one pipe to the other This means that the annular projection of the coupling member is exposed to the corrosive fluid or fluids flowing in the pipes.

As a consequence it has been customary to make the coupling member of a corrosion-resistant material such as stainless steel. This gives the coupling sufficient resistance to corrosive fluids but is disadvantageous in that the coupling is very expensive and lacks sufficient strength, thereby resulting in increased thickness and weight and in interference with other elements and devices in and along pipe line.

DD—A—130 591 discloses a pipe coupling structure having a tubular coupling member including on its inner surface an intermediate annular projection the diameter of which is greater than the inner diameter of the two pipes to be coupled. A lining may be provided on the inner surfaces of the pipes, on the actually opposing end parts of the pipes and on the inner surface of the annular projection. However, in contrast to the corrosion-resistant pipe coupling structure defined in the precharacterizing portion of the claim, in this coupling structure the annular projection is not abuttingly interposed between the opposing end parts of the pipes and corrosive fluids may enter into the space between the end parts of the tubes and the annular projection. Applying the linings to said parts involves a plurality of manufacturing steps which renders the prior art structure expensive.

It is an object of the invention to provide a pipe coupling structure, wherein the strength of the coupling member is sufficient to withstand internal brushes and external forces, while the intermediate annular projection may be provided with means which is resistant to corrosive fluids and which may easily be secured to the annular projection.

In accordance with the present invention, in a pipe coupling structure defined in the precharacterizing portion of the claim, this object is achieved by the features defined in the characterizing portion of the claim.

The detailed nature, utility, and further features of this invention will be more clearly apparent from the following detailed description when read in conjunction with the accompanying drawings, briefly described below.

Brief Description of the Drawings

FIG. 1 is a fragmental longitudinal section of a pipe coupling structure according to an embodiment of this invention; and

FIG. 2 to 4 are longitudinal sections, illustrating sequentially how the structure shown in FIG. 1 can be produced.

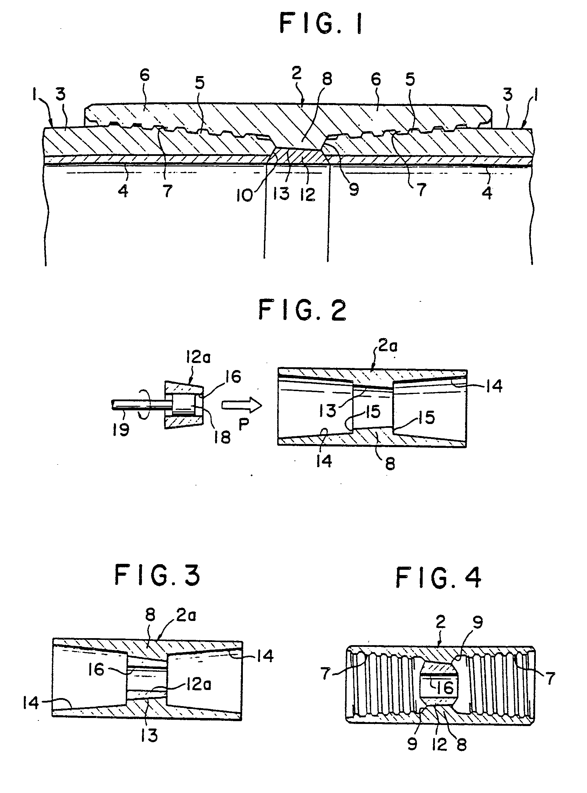

FIG. 1 shows a first embodiment of the pipe coupling structure according to this invention. The coupling structure comprises dual or double-wall composite pipes 1 to be coupled, each made up of an outer pipe 3 and an inner liner pipe 4 interference-fitted in the outer pipe 3, and a coupling member 2 coupling the two pipes 1 by engagement of its female screws 7 with male screws 5 formed on the pipe end portions, as in the prior art pipe coupling structure.

The coupling member 2 is provided with an annular intermediate projection 8 with an annular undercut portions 9 at the two sides thereof, as is known in the art. According to this invention, the intermediate projection 8 terminates short of the inner cylindrical surfaces of the pipes 1, and, instead, an annular member 12 of a corrosion-resistance material, such as a stainless steel, is fixedly secured to the radially inner surface of the projection 8. As shown, the inner surface of the projection 8 is tapered at 13 and the outer surface of the annular member 12 is also tapered correspondingly. The inner surface of the annular member 12 is cylindrical and has the same diameter as the inner surfaces of the inner pipes 1, so that an uninterrupted cylindrical surface is formed within the pipes 1 and the annular member 12. Thus the annular member 12 constitutes a part of the intermediate projection 8.

It will be understood that the inner surface of the pipe coupling structure is lined or covered with the corrosion-resistant material throughout whereby corrosive fluid, such as crude oil, flowing in the pipe coupling structure will not corrode the outer pipes 3 and coupling member main body 2 which are made of non-corrosion-resistant material, such as a high tensile carbon steel. Moreover, strength to withstand internal pressures and external forces is assured by the high tensile carbon steel forming the outer pipes and the coupling member.

The pipe coupling structure of the above construction may be produced by the following procedure.

First, as shown in FIG. 2, a cylindrical body 2a to be formed into the coupling member 2 and a small frustoconical body 12a to be formed into the annular member 12 are prepared separately. The cylindrical body 2a is prepared by machining a non-corrosion-resistant stock material so as to have a cylindrical outer surface, a pair of frustoconical recesses 14 coaxial with the outer surface, and a tapered bore 13 coaxially connecting the recesses 14 in mutual communication with an annular shoulder 15 formed between the bore 13 and each recess 14. The frustoconical body 12a is prepared by machining a corrosion-resistant stock material so as to have a conical outer surface corresponding to the tapered bore 13 and an axial bore 16.

Thereafter, a chucking head 18 secured to a rotating spindle 19 is inserted into the bore 16 of the frustoconical body 12a and the head 18 is expanded for chucking. The spindle 19 is then rotated at a high speed, and the spindle and the body 12a are advanced into the interior of the cylindrical body 2a as indicated by arrow P. The body 12a is inserted finally into the tapered bore 13 and thrusted forward into frictional sliding contact with the surface of the bore 13 by means of a thrusting mechanism not shown. The surface of the tapered bore 13 and the outer conical surface of the body 12a are therefore subjected to friction welding due to frictional heat generated therebetween, and the frustoconical body 12a is fixedly secured to the cylindrical body 2a as indicated in FIG. 3.

The assembly thus obtained is thereafter subjected to machining to form the female screws 7 and the annular undercut portions 9 as shown in FIG. 4. Thus, the pipe coupling member 2, which is to be applied to the pipes 1 as shown in FIG. 1, is produced.

Although the male and female screws 5 and 7 are illustrated as being tapered axially in the example shown, these screws need not be tapered but may be straight.

The above described method of producing the pipe coupling member is advantageous in that the welding surface area can be determined at will to obtain a desired strength of welding with high precision and in that, since the machining is carried out after the friction welding has been made, exact shaping of the undercut portions as well as cleanly trimming of the edges of the friction welded surfaces can be made to attain a high degree of tightness or excellent seal between the pipes and the coupling member.

In the pipe coupling structure described above, the corrosion resistant annular member 12 is secured to the coupling member 2 by friction welding but the annular member can be secured to the coupling member by other securing means such as electron beam welding, laser beam welding and the like, or by adhesives.

## Claim

A corrosion-resistant pipe coupling structure comprising a tubular coupling member (2) having on axially opposite parts thereof internal screw threads (7) engaging male screw threads (5) provided on the axially opposing end parts of two pipes (1 and 1) to be coupled, the internal surface of each of the pipes being resistant to corrosive fluids, and an intermediate annular projection (8) provided on the inner surface of the coupling member (2) and directed radially inward thereof to be abuttingly interposed between the opposing end parts of the pipes, characterized in that said intermediate annular projection (8) has an annular member (12) which is of a material resistant to the corrosive fluids and secured to the annular projection (8) at the radially innermost part thereof, that said annular projection (8) is formed with a bore (13) tapered throughout its axial length and said annular member (12) has a conical outer surface extending throughout its axial length and shaped complementarily to said bore (13), said conical outer surface being secured to said bore.

## Revendication

Une structure de raccord de tuyaux résistant à corrosion comprenant un raccord tubulaire (2) ayant sur ses parties opposées dans la direction axiale, des pas de vis femelles (7) qui se vissent sur les filets mâles (5) usinés sur les parties extrêmes opposées des deux tuyaux (1 et 1) à raccorder, la surface interne de chacun des tuyaux étant résistante à des fluides corrosifs, et une partie annulaire intermédiaire (8) en saillie sur la surface interne du raccord (2), orientée radialement vers l'intérieur du raccord pour s'intercaler en butée entre les extrémités opposées des tuyaux, caractérisée en ce que ladite partie annulaire intermédiaire en saillie (8) comprend une pièce annulaire (12) fabriquée en un matériau qui résiste aux fluides corrosifs, fixée sur la partie annulaire en saillie (8) sur la partie radialement la plus interne de cette dernière, en ce que ladite partie annulaire en saillie (8) présente un alésage (13) effilé sur sa longueur axiale et ladite pièce annulaire (12) ayant une surface extérieure conique le long de sa longueur axiale d'une forme complémentaire de celle dudit alésage (13), ladite surface extérieure conique étant fixée audit alésage.

## Patentanspruch

Korrosionsbeständige Rohrkupplungsstruktur, die ein rohrförmiges Kupplungsteil (2) mit inneren Schraubgewinden (7) an axial entgegengesetzten Bereichen zum Eingriff mit männlichen Schraubgewinden (5) an axial entgegengerichteten Endbereichen von zwei zu kuppelnden, jeweils an der inneren Oberfläche gegenüber korrosiven Fluiden beständigen Rohren (1 und 1), sowie einen Zwischen-Ringvorsprung (8) aufweist, der an der inneren Oberfläche des Kupplungsteils (2) vorgesehen und davon radial nach innen gerichtet ist zum anliegenden Zwischenanordnen zwischen den entgegengerichteten Endbereichen der Rohre, dadurch gekennzeichnet, daß der genannte Zwischen-Ringvorsprung (8) ein Ringteil (12) aufweist, das aus gegenüber den korrosiven Fluiden beständigem Material ist und am radial innersten Bereich des Ringvorsprungs (8) an diesem befestigt ist, daß der genannte Ringvorsprung (8) mit einer über deren Axiallänge sich verjüngenden Bohrung (13) ausgebildet ist, und daß das genannte Ringteil (12) eine sich über seine Axiallänge erstreckende, konische Außenoberfläche aufweist, die komplementär zu der genannten Bohrung (13) gestaltet und an der genannten Bohrung befestigt ist.

4

FIG. 1

FIG. 2

FIG. 3

FIG. 4